# EUROPEAN PATENT APPLICATION

(11) **EP 4 636 944 A1**
(43) Date of publication of application: **22.10.2025**
(21) Application number: 24901048.9
(22) Date of filing: 04.12.2024
(51) Int. Cl.: H01M 50/691, H01M 50/609

(54) **ELECTROLYTE REMOVAL APPARATUS AND ELECTROLYTE REMOVAL METHOD USING SAME**

(30) Priority: 05.12.2023 KR 20230174508
(71) Applicant: LG Energy Solution, Ltd., Seoul 07335 (KR)
(72) Inventor: KIM, Dae Cheon, Daejeon 34122 (KR); PARK, Dae Hyun, Daejeon 34122 (KR); KIM, Jong Seong, Daejeon 34122 (KR)
(74) Representative: Goddar, Heinz J.
(86) International application number: PCT/KR2024/019671
(87) International publication number: WO 2025/121862

(57) **Abstract**

An electrolyte removal device of the present invention is a removal device for removing an electrolyte remaining in a liquid injection instrument for injecting an electrolyte to a battery cell, which comprises a transfer part arranged to transfer the liquid injection instrument, an electrolyte suction part arranged to remove the electrolyte remaining in the liquid injection instrument by suction, an upper O-ring washing part washing an upper O-ring of the liquid injection instrument; a lower O-ring washing part washing a lower O-ring of the liquid injection instrument, and a hot-air drying part spraying hot air to the inside and the outside of the liquid injection instrument to remove a liquid remaining in the liquid injection instrument.

## Description

### Technical Field

The present invention relates to an electrolyte removal device and an electrolyte removal method using the same, and more specifically, relates to an electrolyte removal device capable of effectively removing an electrolyte remaining in an injection instrument used to inject an electrolyte into a battery cell, and an electrolyte removal method using the same.

This application claims the benefit of priority based on Korean Patent Application No. 10-2023-0174508 dated December 5, 2023, the disclosure of which is incorporated herein by reference in its entirety.

### Background Art

Recently, rechargeable secondary batteries have been widely used as an energy source for wireless mobile devices. In addition, secondary batteries have also attracted attention as an energy source for electric transportation devices, hybrid electric transportation devices, and the like., which are proposed as a solution to air pollution from existing gasoline transportation devices, diesel transportation devices, and the like, using fossil fuels. Therefore, the types of applications that use secondary batteries are very diverse due to the advantages of secondary batteries, and it is expected that secondary batteries will be applied to more fields and products in the future.

Meanwhile, in the secondary battery manufacturing process, the electrolyte injection is an important process which affects the battery performance. Particularly, in cylindrical or rectangular batteries in which positive and negative electrodes are wrapped with separators and vortex electrode groups are formed, it is difficult to inject the electrolyte, and various methods have been developed.

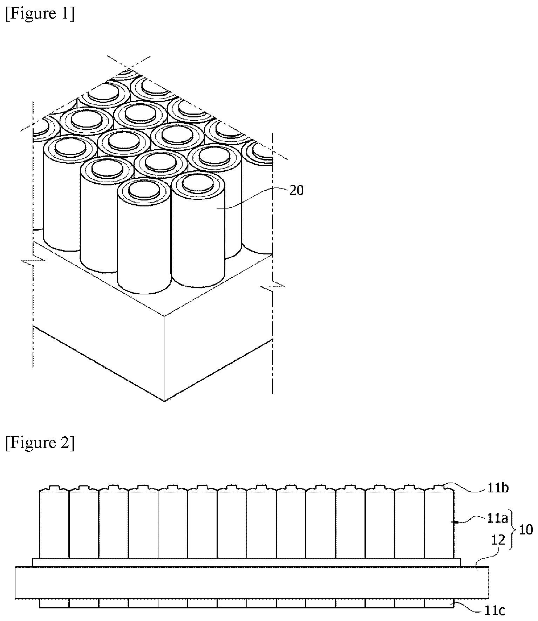

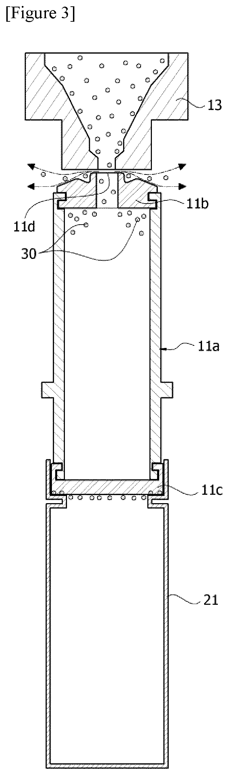

Figure 1 is a schematic diagram schematically showing an appearance of general cylindrical battery cells (20). Figure 2 is a front view schematically showing an appearance of a liquid injection instrument used for general electrolyte injection. Then, Figure 3 is a cross-sectional diagram schematically showing an appearance of injecting an electrolyte into a battery can (21) through a liquid injection instrument used for general electrolyte (30) injection.

Referring to Figures 1 to 3, in the conventional art, in order to inject an electrolyte into a cylindrical battery cell (20), it is common that the electrolyte is moved from an electrolyte tank to an electrolyte supply container through a constant delivery pump, and then the electrolyte (30) is injected through an injection nozzle (13) of an electrolyte injection device in a state where the cylindrical battery can (21) is inserted into an electrolyte injection tube (11a) combined with a pallet (12) of a liquid injection instrument (10).

At this time, the electrolyte injection tube (11a) of the electrolyte injection instrument (10) serves as an intermediate passage for injecting the electrolyte injected from the injection nozzle (13) into the battery can (21) in a precise electrolyte amount. To this end, an upper O-ring (11b) may be provided at the upper portion of the electrolyte injection tube (11a), and an electrolyte injection port (11d) may be formed in the center of such an upper O-ring (11b). A lower O-ring (11c) may be provided at the lower portion of the electrolyte injection tube (11a). Such a lower O-ring (11c) may be arranged to be connected to the upper portion of the battery can (21).

However, in the conventional art, after the electrolyte is injected into the battery can (21) using the electrolyte injection instrument (10), the residual electrolyte (30) remains in the injection tube (11a) of the electrolyte injection instrument (10). This residual electrolyte (30) crystallizes in a subsequent process or affects the electrolyte amount injected during the next liquid injection process, whereby the injection port (11d) of the electrolyte injection tube (11a) may be clogged, or it may negatively affect performance of the battery cell (20).

Furthermore, the problem caused by the residual electrolyte remaining in the electrolyte injection tube (11a) of the liquid injection instrument (10) is particularly serious in a secondary battery provided with a vortex electrode assembly. As a method for solving this problem, a process of separating the electrolyte injection instrument from an electrolyte supply device and cleaning the instrument using ultrasonic cleaning, and the like may be performed, but the matter of performing ultrasonic cleaning every time after electrolyte injection using the liquid injection instrument takes a lot of time and costs, so that it is difficult to clean it every time, and it is inevitable to perform it regularly at regular intervals. For this reason, it is very difficult to perform continuous maintenance of an electrolyte supply pipe in the electrolyte injection process so that the residual electrolyte is little.

Therefore, it is necessary to develop a device and a method capable of effectively removing the electrolyte remaining in the liquid injection instrument for each process cycle of the electrolyte injection process.

### Disclosure

### Technical Problem

The present invention is intended to solve problems occurring in the conventional electrolyte removal process of the secondary battery.

Though one example of the present invention, it is an object which is solved to provide an electrolyte removal device and an electrolyte removal method capable of effectively removing the residual electrolyte remaining in a liquid injection instrument by comprising an electrolyte suction part and a hot-air drying part.

In addition, through one example of the present invention, it is intended to provide an electrolyte removal device and an electrolyte removal method capable of maintaining an electrolyte amount injected into a plurality of battery cells in an appropriate level, and manufacturing high-quality battery cells.

### Technical Solution

To achieve the above-described objects, according to one example of the present invention, it provides a removal device for removing an electrolyte remaining in a liquid injection instrument for injecting an electrolyte to a battery cell, wherein the electrolyte removal device comprises: a transfer part arranged to transfer the liquid injection instrument; an electrolyte suction part arranged to suck the electrolyte remaining in the liquid injection instrument transferred for washing; an O-ring washing part arranged to wash an upper O-ring or a lower O-ring of the liquid injection instrument transferred from the electrolyte suction part; and a hot-air drying part spraying hot air to at least one of the inside and the outside of the liquid injection instrument to remove a liquid remaining in the liquid injection instrument transferred from the O-ring washing part.

The liquid injection instrument may comprise a plurality of injection tube parts, each of which has an interiorly hollow tube into which the battery cell is inserted, provided with an upper O-ring provided on the upper portion of the tube and into which the electrolyte is injected in the electrolyte injection process of the secondary battery, and a lower O-ring provided on the lower portion of the tube and arranged to be capable of coupling with a battery can of the battery cell; and a pallet part in which through-holes, into which each of the plurality of injection tube parts is inserted, are formed.

The electrolyte suction part may comprise an upper suction pipe arranged to suck the electrolyte remaining in the upper O-ring; and a lower suction pipe arranged to suck the electrolyte remaining in the lower O-ring.

The upper suction pipe may have an interiorly hollow tubular shape to surround the upper O-ring, and insert the upper O-ring of the liquid injection instrument through one open end of the tubular shape, and remove the electrolyte remaining in the upper O-ring by sucking it from the other end of the tubular shape.

The lower suction pipe may have an interiorly hollow tubular shape to surround the lower O-ring, and insert the lower O-ring of the liquid injection instrument through one open end of the tubular shape, and remove the electrolyte remaining in the lower O-ring by sucking it from the other end of the tubular shape.

The O-ring washing part may comprise an upper O-ring washing part arranged to wash the upper O-ring of the liquid injection instrument by immersing it in a washing tank containing a detergent solution.

The O-ring washing part may comprise a lower O-ring washing part arranged to wash the lower O-ring of the liquid injection instrument by immersing it in a washing tank containing a detergent solution.

The hot-air drying part may be provided with a spray nozzle arranged to spray hot air to the upper portion and the inside of the liquid injection instrument in a state where the upper O-ring is positioned at the upper portion.

The spray nozzle may comprise an internal spray nozzle arranged to spray hot air into the inside of the liquid injection instrument by being inserted through an electrolyte injection port of the upper O-ring; and at least one external injection nozzle to spray hot air to the outer surface of the liquid injection instrument from the upper portion of the liquid injection instrument.

To achieve the above-described objects, according to one example of the present invention, it provides an electrolyte injection system comprising the electrolyte removal device.

To achieve the above-described objects, according to one example of the present invention, it provides a method of removing an electrolyte remaining in a liquid injection instrument for injecting an electrolyte into a battery cell using the electrolyte removal device, wherein the electrolyte removal method comprises: an electrolyte suction step in which an electrolyte suction part sucks and removes the electrolyte remaining in the liquid injection instrument transferred by a transfer part; an O-ring washing step in which an O-ring washing part washes an upper O-ring or a lower O-ring of the liquid injection instrument transferred from the electrolyte suction part; and a hot-air drying step in which a hot-air drying part sprays hot air to at least one of the inside and the outside of the liquid injection instrument to remove a liquid remaining in the liquid injection instrument transferred from the O-ring washing part.

### Advantageous Effects

As described above, the electrolyte removal device and the electrolyte removal method related to one example of the present invention have the following effects.

By comprising the electrolyte suction part and the hot-air drying part, the residual electrolyte remaining in the liquid injection instrument can be effectively removed.

In addition, the amount of the electrolyte injected into a plurality of battery cells can be maintained at an appropriate level, so that high-quality battery cells can be manufactured.

### Description of Drawings

Figure 1 is a schematic diagram schematically showing an appearance of general cylindrical battery cells.
Figure 2 is a front view schematically showing an appearance of a liquid injection instrument used for general electrolyte injection.
Figure 3 is a cross-sectional diagram schematically showing an appearance of injecting an electrolyte into a battery can through a liquid injection instrument used for general electrolyte injection.
Figure 4 is a conceptual diagram conceptually showing constitutions of an electrolyte removal device according to one example of the present invention.
Figure 5 is a front view schematically showing an appearance of some constitutions of an electrolyte suction part in an electrolyte removal device according to one example of the present invention.
Figure 6 is a cross-sectional diagram schematically showing some constitutions of an electrolyte suction part in an electrolyte removal device according to one example of the present invention.
Figures 7 and 8 are schematic diagrams schematically showing appearances of an upper O-ring washing part in an electrolyte removal device according to one example of the present invention.
Figures 9 and 10 are schematic diagrams schematically showing appearances of a lower O-ring washing part in an electrolyte removal device according to one example of the present invention.
Figure 11 is a front view schematically showing some constitutions of a hot-air drying part in an electrolyte removal device according to one example of the present invention.
Figure 12 is a conceptual diagram conceptually showing constitutions of an electrolyte injection system according to one example of the present invention.
Figure 13 is a flowchart showing steps of an electrolyte removal method according to one example of the present invention.

### Mode for Invention

Hereinafter, an electrolyte removal device and an electrolyte removal method according to one example of the present invention will be described in detail with reference to the attached drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

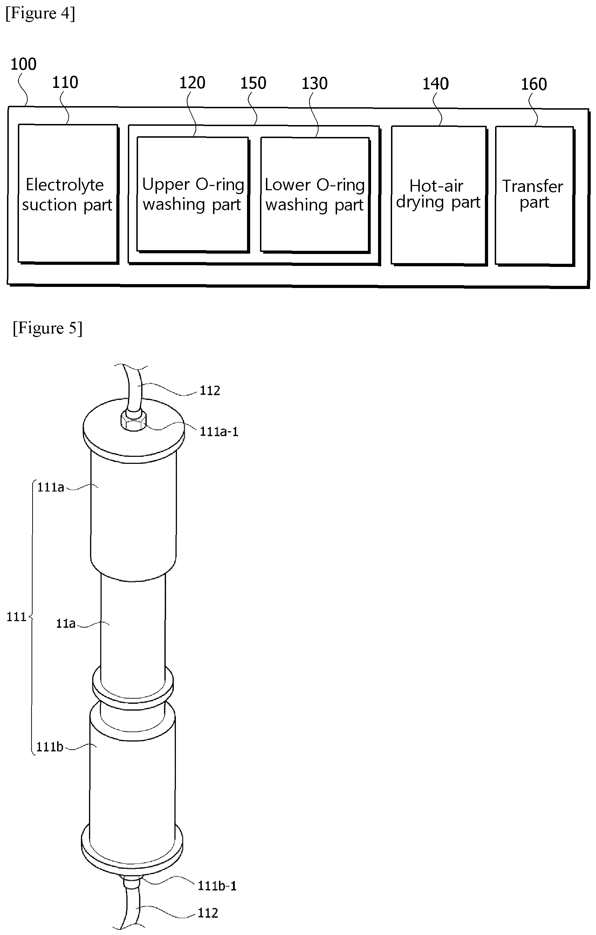

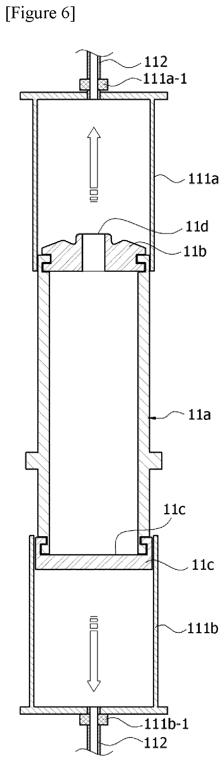

Figure 4 is a conceptual diagram conceptually showing constitutions of an electrolyte removal device (100) according to one example of the present invention. Figure 5 is a front view schematically showing an appearance of some constitutions of an electrolyte suction part (110) in an electrolyte removal device (100) according to one example of the present invention. Then, Figure 6 is a cross-sectional diagram schematically showing an appearance of some constitutions of an electrolyte suction part (110) in an electrolyte removal device (100) according to one example of the present invention.

Referring to Figures 4 to 6 together with Figures 1 and 3 again, an electrolyte removal device (100) according to one example of the present invention is a removal device removing an electrolyte remaining in a liquid injection instrument (10) for injecting an electrolyte into a battery cell (20). The liquid injection instrument (10), as shown in Figure 2, may comprise a plurality of injection tube parts (11a), and a pallet part (12) on which each of the plurality of injection tube parts (11a) is mounted. Specifically, each of the plurality of injection tube parts (11a) may have an interiorly hollow cylindrical tube so that a battery cell (20) is inserted. The injection tube part (11a) is provided with an upper O-ring (11b) on the upper portion of the tube. When the electrolyte (30) is injected into the injection tube part (11a) through a nozzle during an electrolyte injection process of a secondary battery, the upper O-ring (11b) may be arranged to prevent electrolyte leakage by sealing an injection nozzle (13). The injection tube part (11a) is provided with a lower O-ring (11c) on the lower portion of the tube. The lower O-ring (11c) is arranged to be capable of coupling with a battery can (21) of the battery cell (20). The lower O-ring (11c) may be arranged to prevent electrolyte leakage by sealing the injection tube part (11a) and the battery can (21) therebetween during an electrolyte injection process of a secondary battery to prevent electrolyte leakage. Through-holes (not shown), into which each of the plurality of injection tube parts (11a) is inserted, may be formed in the pallet part (12).

Meanwhile, the electrolyte removal device of the present invention comprises a transfer part (160), an electrolyte suction part (110), an O-ring washing part (150), and a hot-air drying part (140), to wash the battery cans of the plurality of cylindrical battery cells (20) and the separated liquid injection instrument. Such a liquid injection instrument (10) is sequentially transferred to the electrolyte suction part (110), the O-ring washing part (150), and the hot-air drying part (140), respectively, by the transfer part (160), and thus washed. However, the liquid injection instrument is not necessarily washed in this order, and the order of the washing method may be changed as needed.

Also, the transfer part (160) may be a constitution of grabbing and moving the pallet (12) of the liquid injection instrument (10). To this end, the transfer part (160) may be provided with a transfer unit (not shown) provided with a gripper capable of grabbing and transferring the liquid injection instrument (10).

In addition, the electrolyte removal device (100) according to one example of the present invention comprises an electrolyte suction part (110). This electrolyte suction part (110) is arranged so that the electrolyte remaining in the liquid injection instrument (10) is sucked and removed through a suction pipe (111). Specifically, the electrolyte suction part (110) comprises a suction pump (not shown) generating a negative pressure for sucking the electrolyte. The electrolyte suction part (110) comprises a connecting hose (112) connecting the suction pump and the suction pipe (111). For example, as shown in Figure 5, the electrolyte suction part (110) may be provided with suction pipes (111a, 111b) used for sucking the electrolyte.

Furthermore, the electrolyte suction part (110) may comprise an upper suction pipe (111a) and a lower suction pipe (111b). The upper suction pipe (111a) may be arranged to suck the electrolyte remaining in the upper O-ring (11b).

The upper suction pipe (111a) may have an interiorly hollow cylindrical shape to surround the upper O-ring (11b). One end of the upper suction pipe (111a) may have an open form so that the upper O-ring (11b) of the liquid injection instrument (10) is inserted. That is, one tubular open end of the upper suction pipe (111a) may be inserted into the upper O-ring (11b) of the liquid injection instrument (10). The other end of the upper suction pipe (111a) may be provided with a suction nozzle (111a-1) arranged to communicate with a suction hose (112) so that a negative pressure is generated inside the pipe. The electrolyte remaining in the upper O-ring (11b) may be removed by suction from the other tubular end of the upper suction pipe (111a).

In addition, the lower suction pipe (111b) may have an interiorly hollow cylindrical shape to surround the lower O-ring (11c). The lower O-ring (11c) of the liquid injection instrument (10) may be inserted through one tubular open end of the lower suction pipe (111b). One end of the lower suction pipe (111b) may have an open form so that the lower O-ring (11c) of the liquid injection instrument (10) is inserted. The other end of the lower suction pipe (111b) may be provided with a suction nozzle (111b-1) arranged to communicate with a suction hose (112) so that a negative pressure is generated inside the pipe. The electrolyte remaining in the lower O-ring (11c) may be removed by suction from the other tubular end of the lower suction pipe (111b).

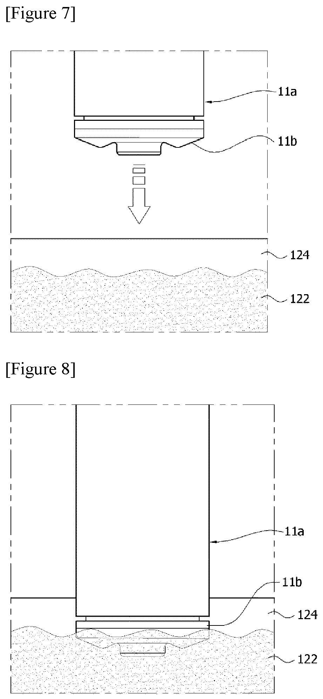

Figures 7 and 8 are schematic diagrams schematically showing appearances of an upper O-ring washing part (120) of an electrolyte removal device (100) according to one example of the present invention.

Referring to Figures 7 and 8 together with Figure 4, the O-ring washing part (150) of the electrolyte removal device (100) of the present invention comprises an upper O-ring washing part (120). The upper O-ring washing part (120) is arranged to wash the upper O-ring (11b) of the liquid injection instrument (10). To this end, the upper O-ring washing part (120) may comprise a detergent solution (122), and a washing tank (124) accommodating such a detergent solution (122). For example, the detergent solution (122) may comprise dimethyl carbonate. For example, the washing tank (124) may be provided with a material without causing a chemical reaction with the detergent solution (122). For example, the washing tank (124) may comprise, as the material, polypropylene, polyethylene, polyethylene terephthalate, polyvinylidene chloride, Teflon, and the like.

Also, in the upper O-ring washing part (120), the liquid injection instrument (10) may be lifted and moved so that the upper O-ring (11b) is immersed in the detergent solution (122) contained in the washing tank (124). For example, the electrolyte may be dispersed by applying vibration in a state where the upper O-ring (11b) is immersed in the detergent solution (122). For example, the vibration method may use an ultrasonic washing method.

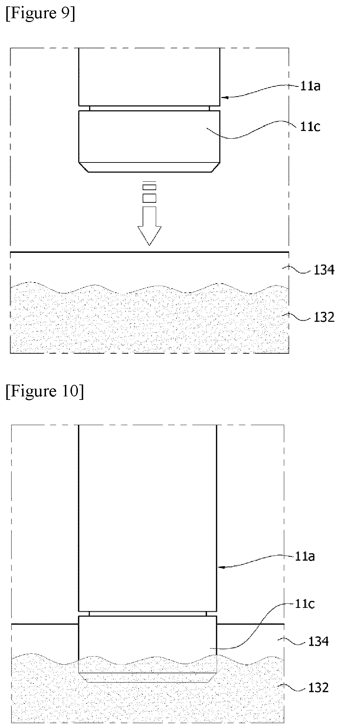

Figures 9 and 10 are schematic diagrams schematically showing appearances of a lower O-ring washing part (130) of an electrolyte removal device (100) according to one example of the present invention.

Referring to Figures 9 and 10 together with Figure 4, the O-ring washing part (150) of the electrolyte removal device (100) of the present invention comprises a lower O-ring washing part (130). The lower O-ring washing part (130) is arranged to wash the lower O-ring (11c) of the liquid injection instrument (10) using a detergent solution (132). The lower O-ring washing part (130) may comprise a detergent solution (132), and a washing tank (134) accommodating such a detergent solution (132).

Also, in the lower O-ring washing part (130), the liquid injection instrument (10) may be lifted and moved so that the lower O-ring (11c) is immersed in the detergent solution (132) contained in the washing tank (134). For example, the electrolyte may be dispersed by applying vibration in a state where the lower O-ring (11c) is immersed in the detergent solution (132). For example, the vibration method may use an ultrasonic washing method.

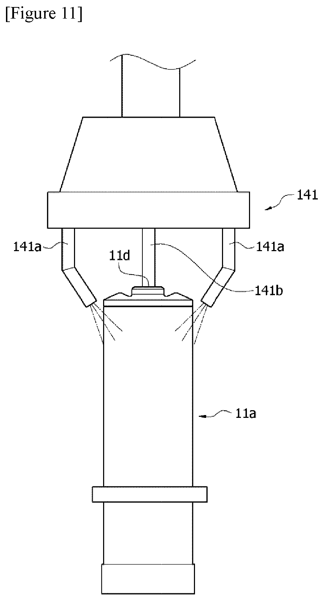

Figure 11 is a front view schematically showing an appearance of some constitutions of a hot-air drying part (140) in an electrolyte removal device (100) according to one example of the present invention.

Referring to Figure 11 together with Figure 4 again, the hot-air drying part (140) may be provided with a spray nozzle (141) arranged to spray hot air to at least one of the outside and the inside of the liquid injection instrument (10) in a state where the upper O-ring (11b) is positioned at the top. In addition, the spray nozzle (141) may be provided with an internal spray nozzle (141a) and at least one external spray nozzle (141b). Here, the internal spray nozzle (141a) may be arranged to spray hot air into the inside of the liquid injection instrument (10) by being inserted through an electrolyte injection port (11c) of the upper O-ring (11b). For example, the external spray nozzle (141b) may be arranged to spray hot air onto the outer surface of the liquid injection instrument (10) from the top of the liquid injection instrument (10).

Therefore, the electrolyte removal device (100) of the present invention can effectively remove the residual electrolyte remaining in the liquid injection instrument (10) by comprising the electrolyte suction part (110) and the hot-air drying part (140), thereby maintaining the amount of the electrolyte injected into a plurality of battery cells (20) at an appropriate level, and thus manufacturing high-quality battery cells (20).

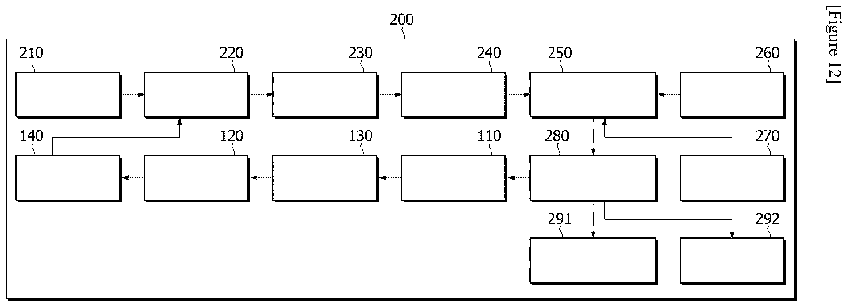

Figure 12 is a conceptual diagram conceptually showing constitutions of an electrolyte injection system (200) according to one example of the present invention.

Referring to Figure 12 together with Figures 1 to 4, the present application provides an electrolyte injection system (200) according to one example of the present invention. The electrolyte injection system (200) of the present invention comprises an electrolyte removal device (100). Here, the electrolyte removal device (100) is like or identical to the electrolyte removal device (100) as described above, so that detailed descriptions of the detailed constitutions of the electrolyte removal device (100) will be omitted.

Also, the electrolyte injection system (200) of the present invention may comprise a battery cell supply part (210) arranged to supply cylindrical battery cells (20) to a pallet coupling part (220).

In addition, the electrolyte injection system (200) of the present invention may comprise a pallet coupling part (220) arranged to couple a plurality of cylindrical battery cells (20) to a pallet part (12) and a liquid injection instrument (10) including a plurality of injection tube parts (11a).

Furthermore, the electrolyte injection system (200) of the present invention may comprise a liquid injection loader part (230) provided with an electrolyte storage tank and an electrolyte supply pump to supply an electrolyte to a cylindrical battery cell (20) coupled with a liquid injection instrument (10).

Also, the electrolyte injection system (200) of the present invention may comprise a liquid injection chamber part (240) arranged to inject an electrolyte into a cylindrical battery cell (20) coupled with a liquid injection instrument (10) inside a chamber. At this time, in the cylindrical battery cell (20), the electrolyte supplied from the liquid injection loader part (230) inside the liquid injection chamber part (240) may be injected to the inside of a battery can (21) through an injection nozzle.

In addition, the electrolyte injection system (200) of the present invention may comprise a pressurization/vacuum chamber part (250) arranged to create a pressurization and vacuum environment for a plurality of cylindrical battery cells (20), into which an electrolyte is injected, inside the chamber. At this time, the plurality of cylindrical battery cells (20) into which the liquid injection has been completed in the liquid injection chamber part (240) may be moved to the pressurization/vacuum chamber part (250), and then exposed to the pressurization and vacuum environment.

Furthermore, the electrolyte injection system (200) of the present invention may comprise a pressurizing loader part (260) arranged to increase an intra-chamber pressure in the pressurization/vacuum chamber part (250).

Also, the electrolyte injection system (200) of the present invention may comprise a pressurizing unloader part (270) arranged to decrease an intra-chamber pressure in the pressurization/vacuum chamber part (250).

In addition, the electrolyte injection system (200) of the present invention may comprise a pallet separation part (280) arranged to separate the plurality of cylindrical battery cells (20) coupled to the liquid injection instrument (10) from the liquid injection instrument (10). Such a separation process may be performed after the plurality of cylindrical battery cells (20) is discharged from the pressurization/vacuum chamber part (250).

Furthermore, the electrolyte injection system (200) of the present invention may comprise a battery cell discharge part (291) discharging the plurality of cylindrical battery cells (20) separated from the pallet (12) to the outside.

Also, the electrolyte injection system (200) of the present invention may comprise a defective cell discharge part (292) discharging the battery cell (20) determined to be a defective cell among the plurality of cylindrical battery cells (20) separated from the pallet (12) to the outside.

In addition, the electrolyte injection system (200) of the present invention may comprise an electrolyte removal device (100) for washing the liquid injection instrument (10) separated from the plurality of cylindrical battery cells (20). Specifically, the electrolyte injection system (200) of the present invention may comprise an electrolyte suction part (110) arranged to remove the electrolyte remaining in the liquid injection instrument (10) by suction. The electrolyte injection system (200) of the present invention may comprise an upper O-ring washing part (120) washing the upper O-ring (11b) of the liquid injection instrument (10). The electrolyte injection system (200) of the present invention may comprise a lower O-ring washing part (130) washing the lower O-ring (11c) of the liquid injection instrument (10) using a detergent solution (122). The electrolyte injection system (200) of the present invention may comprise a hot-air drying part (140) spraying hot air to the inside and the outside of the liquid injection instrument (10) to remove a liquid remaining in the liquid injection instrument (10).

Furthermore, the electrolyte injection system (200) of the present invention may transfer the liquid injection instrument (10) dried by the hot-air drying part (140) to the pallet coupling part (220), to re-couple with the plurality of cylindrical battery cells (20).

Therefore, the electrolyte injection system (200) of the present invention can effectively remove the residual electrolyte remaining in the liquid injection instrument (10) by comprising the electrolyte removal device (100), thereby maintaining the amount of the electrolyte injected into the plurality of battery cells (20) at an appropriate level, and thus manufacturing high-quality battery cells (20).

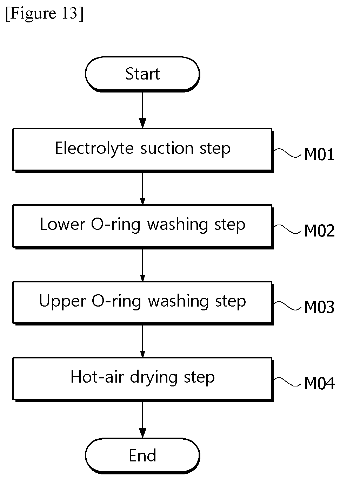

Figure 13 is a flowchart showing steps of an electrolyte removal method according to one example of the present invention.

Referring to Figure 13 together with Figures 1 to 11 again, the present application provides a method of removing the electrolyte remaining in the liquid injection instrument (10) for injecting the electrolyte into the battery cell (20).

Specifically, the electrolyte removal method of the present invention comprises an electrolyte suction step (M01). The electrolyte suction step (M01) is a step in which an electrolyte suction part (110) sucks and removes the electrolyte remaining in the liquid injection instrument (10) transferred by a transfer part (160).

Also, the electrolyte removal method of the present invention comprises an O-ring washing step in which an O-ring washing part (150) washes an upper O-ring (11b) or a lower O-ring (11c) of the liquid injection instrument (10) transferred from the electrolyte suction part (110). Specifically, the O-ring washing step may comprise a lower O-ring washing step (M02) and an upper O-ring washing step (M03).

In addition, the lower O-ring washing step (M02) is a step in which a lower O-ring washing part (130) washes a lower O-ring (11c) of the liquid injection instrument (10) using a detergent solution (122).

Furthermore, the upper O-ring washing step (M03) is a step in which an upper O-ring washing part (120) washes an upper O-ring (11b) of the liquid injection instrument (10) using a detergent solution (122).

Also, the electrolyte removal method of the present invention comprises a hot-air drying step (M04). The hot-air drying step (M04) is a step in which a hot-air drying part (140) sprays hot air to at least one of the inside and the outside of the liquid injection instrument (10) to remove a liquid remaining in the liquid injection instrument (10) transferred from the O-ring washing part (150).

Therefore, the electrolyte removal method of the present invention can effectively remove the residual electrolyte remaining in the liquid injection instrument (10) by comprising the electrolyte suction step (M01) and the hot-air drying step (M04), thereby maintaining the amount of the electrolyte injected into the plurality of battery cells (20) at an appropriate level, and thus manufacturing high-quality battery cells (20).

Also, the liquid injection instrument (10) may comprise a plurality of injection tubes (11a). The injection tubes (11a) may each have an interiorly hollow tube into which a battery cell (20) is inserted. The injection tube (11a) may be provided at the upper portion of the tube and may be provided with an upper O-ring (11b) into which an electrolyte is injected in an electrolyte injection process of a secondary battery. The injection tube (11a) may be provided with a lower O-ring (11c) provided at the lower portion of the tube and arranged to be capable of coupling with a battery can (21) of the battery cell (20).

In addition, the liquid injection instrument (10) may comprise a pallet part (12) in which through-holes, into which each of the plurality of injection tubes (11a) is inserted, are formed. However, since such an injection instrument (10) is a constitution like or identical to the liquid injection instrument (10) as described above, detailed descriptions thereof will be omitted.

Furthermore, in the electrolyte suction step (M01), the upper suction pipe (111a) of the electrolyte suction part (110) may suck the electrolyte remaining in the upper O-ring (11b). The lower suction pipe (111b) of the electrolyte suction part (110) may suck the electrolyte remaining in the lower O-ring (11c).

Also, in the lower O-ring washing step (M02), the lower O-ring washing part (130) may wash the lower O-ring (11c) of the liquid injection instrument (10) by immersing it in a washing tank (134) containing a detergent solution (132).

In addition, in the upper O-ring (11b) washing step (M03), the upper O-ring washing part (120) may wash the upper O-ring (11b) of the liquid injection instrument (10) by immersing it in a washing tank (124) containing a detergent solution (122).

Furthermore, in the hot-air drying step (M04), the spray nozzle (141) of the hot-air drying part (140) may spray hot air to the upper portion and the inside of the liquid injection instrument (10) in a state where the upper O-ring (11b) is positioned at the upper portion.

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to the electrolyte removal device and the electrolyte removal method related to one example of the present invention, it is possible to effectively remove the residual electrolyte remaining in the liquid injection instrument by comprising the electrolyte suction part and the hot-air drying part.

## Claims

1. A removal device for removing an electrolyte remaining in a liquid injection instrument for injecting an electrolyte to a battery cell, wherein the electrolyte removal device is **characterized by** comprising:
a transfer part arranged to transfer the liquid injection instrument;
an electrolyte suction part arranged to suck the electrolyte remaining in the liquid injection instrument transferred for washing;
an O-ring washing part arranged to wash an upper O-ring or a lower O-ring of the liquid injection instrument transferred from the electrolyte suction part; and
a hot-air drying part spraying hot air to at least one of the inside and the outside of the liquid injection instrument to remove a liquid remaining in the liquid injection instrument transferred from the O-ring washing part.

2. The electrolyte removal device according to claim 1, **characterized in that**
the liquid injection instrument comprises:
a plurality of injection tube parts, each of which has an interiorly hollow tube into which the battery cell is inserted, provided with an upper O-ring provided on the upper portion of the tube and into which the electrolyte is injected in the electrolyte injection process of the secondary battery, and a lower O-ring provided on the lower portion of the tube and arranged to be capable of coupling with a battery can of the battery cell; and
a pallet part in which through-holes, into which each of the plurality of injection tube parts is inserted, are formed.

3. The electrolyte removal device according to claim 2, **characterized in that**
the electrolyte suction part comprises:
an upper suction pipe arranged to suck the electrolyte remaining in the upper O-ring; and
a lower suction pipe arranged to suck the electrolyte remaining in the lower O-ring.

4. The electrolyte removal device according to claim 3, **characterized in that**
the upper suction pipe has
an interiorly hollow tubular shape to surround the upper O-ring, and inserts the upper O-ring of the liquid injection instrument through one open end of the tubular shape, and removes the electrolyte remaining in the upper O-ring by sucking it from the other end of the tubular shape.

5. The electrolyte removal device according to claim 3, **characterized in that**
the lower suction pipe has
an interiorly hollow tubular shape to surround the lower O-ring, and inserts the lower O-ring of the liquid injection instrument through one open end of the tubular shape, and removes the electrolyte remaining in the lower O-ring by sucking it from the other end of the tubular shape.

6. The electrolyte removal device according to claim 2, **characterized in that**
the O-ring washing part comprises
an upper O-ring washing part arranged to wash the upper O-ring of the liquid injection instrument by immersing it in a washing tank containing a detergent solution.

7. The electrolyte removal device according to claim 2, **characterized in that**
the O-ring washing part comprises
a lower O-ring washing part arranged to wash the lower O-ring of the liquid injection instrument by immersing it in a washing tank containing a detergent solution.

8. The electrolyte removal device according to claim 2, **characterized in that**
the hot-air drying part is provided with
a spray nozzle arranged to spray hot air to the upper portion and the inside of the liquid injection instrument in a state where the upper O-ring is positioned at the upper portion.

9. The electrolyte removal device according to claim 8, **characterized in that**
the spray nozzle comprises:
an internal spray nozzle arranged to spray hot air into the inside of the liquid injection instrument by being inserted through an electrolyte injection port of the upper O-ring; and
at least one external injection nozzle to spray hot air to the outer surface of the liquid injection instrument from the upper portion of the liquid injection instrument.

10. A method of removing an electrolyte remaining in a liquid injection instrument for injecting an electrolyte into a battery cell using the electrolyte removal device according to any one of claim1 1 to 9, wherein the electrolyte removal method is **characterized by** comprising:
an electrolyte suction step in which an electrolyte suction part sucks and removes the electrolyte remaining in the liquid injection instrument transferred by a transfer part;
an O-ring washing step in which an O-ring washing part washes an upper O-ring or a lower O-ring of the liquid injection instrument transferred from the electrolyte suction part; and
a hot-air drying step in which a hot-air drying part sprays hot air to at least one of the inside and the outside of the liquid injection instrument to remove a liquid remaining in the liquid injection instrument transferred from the O-ring washing part.

11. The electrolyte removal method according to claim 10, **characterized by** comprising:
a plurality of injection tube parts, each of which has an interiorly hollow tube into which the battery cell is inserted, provided with an upper O-ring provided on the upper portion of the tube and into which the electrolyte is injected in the electrolyte injection process of the secondary battery, and a lower O-ring provided on the lower portion of the tube and arranged to be capable of coupling with a battery can of the battery cell; and
a pallet part in which through-holes, into which each of the plurality of injection tube parts is inserted, are formed.

12. The electrolyte removal method according to claim 10, **characterized in that**
in the electrolyte suction step,
the upper suction pipe of the electrolyte suction part sucks the electrolyte remaining in the upper O-ring, and
the lower suction pipe of the electrolyte suction part sucks the electrolyte remaining in the lower O-ring.

13. The electrolyte removal method according to claim 10, **characterized in that**
the O-ring washing step comprises
a lower O-ring washing step of immersing the lower O-ring of the liquid injection instrument in a washing tank containing a detergent solution to wash it.

14. The electrolyte removal method according to claim 10, **characterized in that**
the O-ring washing step comprises
an upper O-ring washing step of immersing the upper O-ring of the liquid injection instrument in a washing tank containing a detergent solution to wash it.

15. The electrolyte removal method according to claim 10, **characterized in that**
in the hot-air drying step,
the spray nozzle of the hot-air drying part sprays hot air to the upper portion and the inside of the liquid injection instrument in a state where the upper O-ring is positioned at the upper portion.
